Europäisches Patentamt

(19) European Patent Office

Office européen des brevets

(11) Veröffentlichungsnummer: **0 168 556**
**A2**

(12) **EUROPÄISCHE PATENTANMELDUNG**

(21) Anmeldenummer: 85103608.7

(22) Anmeldetag: 26.03.85

(51) Int. Cl.⁴: **C 05 F 9/04**, B 01 J 39/08,
C 04 B 18/30, B 01 J 20/00,
B 01 D 53/02

(30) Priorität: 30.03.84 DE 3411952
04.07.84 DE 3424612

(43) Veröffentlichungstag der Anmeldung: 22.01.86
Patentblatt 86/4

(84) Benannte Vertragsstaaten: AT BE CH FR GB IT LI LU NL SE

(71) Anmelder: Columbus Neunkirchen Foundry GmbH, Am Ochsenwald, D-6680 Neunkirchen (DE)
Anmelder: Schnorr, Karl-Ernst, Niederau 6, D-6335 Lahnau (DE)

(72) Erfinder: Regitz, Klaus, Ing. grad., Gartenstrasse 13, D-6654 Kirkel-Limbach (DE)
Erfinder: Schnorr, Karl-Ernst, Ing. grad., Niederau 6, D-6335 Lahnau 3 (DE)
Erfinder: Schüssler, Heinrich, Ing. grad., Klausener Strasse 80, D-6620 Völklingen (DE)
Erfinder: Schwarz, Karl-Heinz, Am Kirchberg 6, D-6604 Brebach-Fechingen (DE)
Erfinder: Stackmann, Hans Georg, Dipl.-Ing., Rammelter Weg 2, D-6620 Völklingen (DE)

(74) Vertreter: Lorenz, Eduard et al, Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier, Widenmayerstrasse 23 D-8000 München 22 (DE)

(54) **Mittel zum Aufbau und zur Verbesserung des Kationenaustausches im Boden durch biologische Fermentation.**

(57) Die Erfindung bezieht sich auf ein Mittel zum Aufbau und zur Verbesserung des Kationenaustausches im Boden durch biologische Fermentation. Um zu erreichen, daß derartige Mittel nach erfolgter Fermentation ein Höchstmaß an Binde- und Austauschvermögen besitzen, mischt man biologisch abbaubare organische Stoffe (Biomasse) mit Ton-, Kohle- und quarzhaltigen Stoffen, welches Gemisch nach biologischer Fermentation hochsorbitons- und kationenaustauschfähige Komplexe bildet.

EP 0 168 556 A2

B e s c h r e i b u n g

Die Erfindung bezieht sich auf ein Mittel gemäß dem Oberbegriff
des Patentanspruchs 1.

Naturböden haben aufgrund ihrer Zusammensetzung und ihres
Aufbaues ein entsprechendes Wasserhalte- und Kationenaustauschvermögen. Dieses wird durch die auf biologisch-fermentativem Weg entstandenen Ton-Humus-Komplexe bestimmt. Dabei
werden von Mikroorganismen aus biologisch abbaubaren organischen Bestandteilen und Tonmineralen Körper geschaffen, die
bis zu zehnfach höhere Adsorptionskräfte entfalten als
Tonminerale selbst. Der Ablauf der biologischen Fermentation
ist an das Vorhandensein von Luftsauerstoff, Stickstoff,
Wasser und Spurenelementen gebunden.

Für die Herstellung von Bodenverbesserern wurden bisher
Klärschlämmen weitere organisch abbaubare Stoffe, wie beispielsweise Holzmehl oder Zellulose, zugeführt. Die so hergestellten Produkte hatten jedoch einen zu hohen Wassergehalt,
der eine günstige Luftzufuhr zu den fermentierten aeroben
Mikroorganismen erschwerte und auch keine freien Hohlräume
zur sorptiven Bindung von fremden zu sorbierenden Stoffen
mehr vorwiesen. Ein weiterer Nachteil bestand darin, daß
bei der Fermentierung üble Gerüche entstanden, weil infolge
zu hohen Wassergehaltes die anaerob tätigen Mikroorganismen
Schwefelwasserstoff und übelriechende Säuren und Ester bildeten.

Der Erfindung liegt die Aufgabe zugrunde, die bekannten
Mittel nach dem Oberbegriff des Anspruchs 1 derart zu
verbessern, daß sie unter Vermeidung der aufgezeigten Nachteile nach erfolgter Fermentation ein Höchstmaß an
Binde- und Austauschvermögen besitzen.

Die Lösung der gestellten Aufgabe durch die Erfindung erfolgt
durch das Kennzeichen des Patentanspruchs 1. Vorzugsweise
sind die Sand-Kohle-Tonteile Gießereisand oder -staub und
die Biomasse Klärschlamm. Das erfindungsgemäße Mittel hat
den Vorteil, daß die notwendige Feuchte zur aeroben biologischen Fermentation in dem Gießereisand- oder -staubanteil
der Mischung gespeichert und um die biologisch-fermentierbare organische Substanz herum so angelagert ist, daß eine
luftdurchlässige Hülle entsteht. Die im Inneren dieser Körper
befindliche organische Substanz wird von aeroben Mikroorganismen verzehrt und im Stoffwechselvorgang mit im Gießereisand und/oder -staub enthaltenen Tonmineralien zu hochsorptions- und kationenaustauschfähigen Ton-Humus-Komplexen verbaut. Die in dem Gießereisand und/oder -staub enthaltenen
Kohleteilchen wirken dabei dann wie Aktivkohlefilter, indem
sie auch die bei der Fermentation entstehenden Gerüche neutralisieren. Die biologische Fermentation ist an eine bestimmte zeitliche Funktion gebunden. Diese ist technisch
beeinflußbar, indem Feuchtigkeit, Temperatur und Luftzufuhr
gesteuert werden und die Lagerung der reagierenden Masse
frei von Witterungseinflüssen, vorzugsweise in Autoklaven,
erfolgt.

Die Verwendung der entstehenden Endprodukte kann überall
dort erfolgen, wo durch Sorption bestimmte Stoffe festgelegt
werden sollen, z.B. Schwermetalle und stark belastete Sickerwässer in Abfalldeponien.

Der vorzugsweise zur Mischung mit Klärschlamm benutzte
Gießereisand und Gießereistaub wurde deshalb gewählt, weil
die Zusammensetzungen ein günstiges Verhältnis von Quarz-Tonerde und Kohle aufweisen, einen geringen Wassergehalt haben und zudem noch wie Klärschlamm schwer zu beseitigende Abfälle sind. Der hohe Tonerdanteil bringt außerdem ein hohes Wasserbinde- und damit Quellvermögen. Das
entstehende Produkt eignet sich daher in hervorragender
Weise zur Bodenverbesserung nährstoffarmer Böden, zur Basisabdichtung von Abfalldeponien und zum absoluten Schutz des
Grundwassers.

Soll eine biologische Fermentation ausgeschlossen und ein
poröses Gefüge geschaffen werden, kann die Mischung in einer
vorteilhaften Ausführungsform der Erfindung nach Zugabe von
geeigneten Bindemitteln einer thermischen Behandlung unterzogen werden. Dabei vergasen die organischen Bestandteile
und schaffen Hohlräume.

Die Erfindung befaßt sich auch mit den Schwierigkeiten, sehr trockene, wasserabweisende Stoffe und feuchte,
pastöse Stoffe homogen miteinander zu mischen. Zur Behebung
dieser Schwierigkeiten schlägt sie Zwangsmischer mit zusätzlich im Inneren rotierenden Rührwerken vor. Eine homogene Mischung, mit einer in kleine Partikel zerteilten
pastösen Masse ist aus verschiedenen Gründen erforderlich.
Die Oberflächen der Biomassenpartikel müssen zum jeweiligen
Partikelquerschnitt ein optimales Verhältnis aufweisen, um
ausreichende Mengen Quarzsand-, Ton- und Kohle-Teile anlagern zu können.

Weiter befaßt sich die Erfindung damit, daß die Anwesenheit
von Kohleteilen unter Umständen störend wirken kann. Sie
lehrt infolgedessen, das Mittel nach der Mischung thermisch zu behandeln, so daß die Kohle vergast. Da bei diesem Vorgang der Kohlenstoff der Zellulose ebenso entfernt[*] entstehen Hohlräume mit hohem Adsorptionsvermögen.

Eine weitere Möglichkeit einer vorteilhaften Mischung ist darin zu sehen, daß Quarzsand mit Ton und Klärschlamm ohne zusätzliche Kohleteile gemischt werden. Die hierbei eventuell stärkere Geruchsentwicklung ist dadurch zu verhindern, daß entweder als Klärschlammkomponente Faulschlamm verwendet wird und/oder als Desinfektionsmittel Kalk beigemischt wird.

[*] wird

<u>P a t e n t a n s p r ü c h e</u>

1. Mittel zum Aufbau und zur Verbesserung des Kationenaustausches im Boden durch biologische Fermentation, das
   d a d u r c h   e r h ä l t l i c h   ist, daß man biologisch abbaubare organische Stoffe (Biomasse) mit ton-,
   kohle- und quarzhaltigen Stoffen mischt, welches Gemisch
   nach biologischer Fermentation hochsorptions- und kationenaustauschfähige Komplexe bildet.

2. Mittel nach Anspruch 1, dadurch gekennzeichnet, daß
   man Sand-Kohle-Tonteile an feuchte, biologisch fermentierbare, organische Bestandteile anlagert.

3. Mittel nach Anspruch 1 oder 2, dadurch gekennzeichnet,
   daß die Sand-Kohle-Tonteile Gießereisand und/oder -staub
   und die Biomasse Klärschlamm sind.

4. Mittel nach einem der Ansprüche 1 bis 3, dadurch gekennzeichnet, daß man die Komponenten vor der Mischung auf
   einen zur Komplexbildung günstigen Wassergehalt bringt.

5. Mittel nach einem der Ansprüche 1 bis 4, dadurch gekennzeichnet, daß man die Sand-Kohle-Ton-Komponente auf einen
   Wassergehalt bis etwa 10 % und die Klärschlamm-Komponente
   auf einen solchen von ca. 4 bis 35 %, vorzugsweise 20 %,
   bringt.

6. Mittel nach einem der Ansprüche 1 bis 5, dadurch gekennzeichnet, daß man die biologische Fermentation in einem
   Klärschlamm- oder Müll-Rottesilo durchführt.

7. Mittel nach einem der Ansprüche 1 bis 5, dadurch gekennzeichnet, daß man die biologische Fermentation im Freien auf einer Zwischenlagerstätte durchführt.

8. Mittel nach einem der Ansprüche 1 bis 5, dadurch gekennzeichnet, daß man die biologische Fermentation an einer Endlagerstätte durchführt.

9. Mittel nach einem der Ansprüche 4 oder 5, dadurch gekennzeichnet, daß die Entwässerung der feuchten Biomasse durch statische Eindickung oder durch Entwässerung mittels einer Maschine erfolgt.

10. Mittel nach einem der Ansprüche 1 bis 9, dadurch gekennzeichnet, daß man es nach der Mischung einer thermischen Behandlung unterzieht.

11. Mittel nach einem der Ansprüche 1 bis 10, dadurch gekennzeichnet, daß die Mischung der Komponenten in einem Trommel- oder Tellermischer mit Bodenabstreifer erfolgt.

12. Mittel nach Anspruch 11, dadurch gekennzeichnet, daß die Mischung in einem Trommel- oder Tellermischer mit Bodenabstreifer und Seitenabstreifer erfolgt.

13. Mittel nach Anspruch 11 und 12, dadurch gekennzeichnet, daß die Mischung durch zusätzliche bewegliche Teile im Mischer unterstützt wird.

14. Mittel nach Anspruch 11, dadurch gekennzeichnet, daß die Mischung in einem Freifallmischer mit oder ohne Widerstände erfolgt.

15. Mittel nach Anspruch 11, dadurch gekennzeichnet, daß die Mischung in einem feststehenden Behälter durch um eine waagerechte oder senkrechte Achse drehende Rührwerke gemischt wird.

16. Mittel nach einem der Ansprüche 10 bis 15, dadurch gekennzeichnet, daß naturfeuchte und/oder getrocknete Biomassen dem Gießereisand oder -staub zur Erhöhung des Kohlenstoffgehaltes beigemischt werden.

17. Mittel nach einem der Ansprüche 10 bis 15, dadurch gekennzeichnet, daß zur Verminderung des Kohlenstoffgehaltes der Mischung das Mittel einer thermischen Behandlung unterzogen wird.

18. Mittel nach einem der Ansprüche 10 bis 17, dadurch gekennzeichnet, daß Sand und Ton ohne Kalk mit Klärschlamm gemischt werden.

19. Mittel nach einem der Ansprüche 10 bis 18, dadurch gekennzeichnet, daß der Mischung Kalk oder ein anderes Desinfektionsmittel zugegeben wird.

20. Verwendung eines Mittels nach einem der Ansprüche 1 bis 10 für Katalysatoren.

21. Verwendung eines Mittels nach einem der Ansprüche 1 bis 10 als Chemikalie in der Industrie oder in der Landwirtschaft.

22. Verwendung eines Mittels nach einem der Ansprüche 1 bis 10 als Baustoff.

23. Verwendung eines Mittels nach einem der Ansprüche 1 bis 10 als Geruchsfilter.